# FASCICULE DE BREVET EUROPEEN

(11) **EP 2 979 145 B1**
(45) Date de publication et mention de la délivrance du brevet: **12.06.2019**
(21) Numéro de dépôt: 14724117.8
(22) Date de dépôt: 24.03.2014
(51) Int. Cl.: G05D 16/10

(54) **DETENDEUR INVERSE COMPACT POUR LA DISTRIBUTION DE GAZ**
KOMPAKTER INVERTIERTER DRUCKREGLER ZUR ABGABE EINES GASES
COMPACT INVERTED PRESSURE REGULATOR FOR DISPENSING A GAS

(30) Priorité: 25.03.2013 FR 1300681
(43) Date de publication de la demande: 03.02.2016
(73) Titulaire: AD Venta, 26300 Bourg de Peage (FR)
(72) Inventeur: MUSSOT Jean-Luc, 26270 Loriol sur Drome (FR)
(74) Mandataire: Novagraaf Technologies
(86) Numéro de dépôt international: PCT/FR2014/000062
(87) Numéro de publication internationale: WO 2014/154953

(56) Documents cités:
- EP-A2- 1 562 026
- WO-A2-2007/149882
- WO-A2-2012/173527
- DE-U1- 9 409 582
- US-A1- 2004 187 929

## Description

La présente invention a pour objet un détendeur inversé compact pour la distribution de gaz.

Le secteur technique de l'invention est le domaine de la fabrication et de l'utilisation de dispositifs de détente de gaz à pression dans lesquels la délivrance du gaz détendu à une pression déterminée est indépendante de la pression du gaz à l'entrée.

Afin de réaliser la détente d'un gaz, depuis un premier niveau de pression dite haute jusqu'à un deuxième niveau de pression dite basse, inférieure à la pression haute, il est en effet connu d'utiliser des dispositifs de détente, plus simplement appelés détendeurs.

Le principe de fonctionnement d'un détendeur est parfaitement connu : il repose sur l'égalité de deux forces exercées directement ou indirectement, de part et d'autre d'une pièce mobile de régulation, telle qu'une membrane ou un piston, par d'une part le gaz à la pression haute et à la pression basse, et d'autre part un élément à effet ressort ; ainsi dans le cas le plus courant où la force de référence de l'élément ressort s'exerce du côté opposé à celle transmise à la fois par le gaz à la pression basse et à la pression haute, ces deux gaz remplissant deux chambres séparées par une cloison dotée d'un conduit dans lequel coulisse une tige solidaire de la pièce mobile de régulation et comportant un clapet apte à fermer ce conduit dans le sens de la chambre à pression haute vers la chambre à pression basse, quand la force transmise à la fois par le gaz à la pression basse et à la pression haute est plus faible que celle antagoniste transmise par le ressort, celle-ci pousse la pièce mobile de régulation dont le clapet situé sur sa tige ouvre alors l'arrivée du gaz à la pression haute : celui-ci va alimenter ainsi la chambre à la pression basse jusqu'à ce que celle-ci, en augmentant, permette d'exercer une force sur la pièce mobile de régulation égale puis supérieure à celle antagoniste de l'élément ressort; cette force supérieure va pousser la pièce mobile de régulation jusqu'à fermer l'arrivée du gaz à la pression haute, et ainsi de suite; l'équilibre des dites forces assure ainsi une pression basse voulue quasi constante pour une valeur de poussée de l'élément ressort déterminée, qui peut être réglable.

On appellera détendeur inversé, un détendeur dans lequel l'élément ressort exerce sur la pièce mobile de régulation une force, en sens inverse de celle du cas le plus courant ci-dessus, à savoir du même côté que la force transmise par le gaz à la pression haute, la surface en contact avec le gaz, respectivement à la pression haute, étant alors inférieure à la surface en contact avec le gaz, respectivement à la pression basse. Les dites surfaces dites en contact sont définis comme étant les surfaces efficaces transmettant la pression considérée à la pièce mobile de régulation dans le sens de son déplacement.

Par ailleurs dans la plupart des détendeurs connus, qu'ils soient inversés ou non, si la pression haute du gaz à détendre subit de grandes variations, la force correspondante sur la pièce mobile de régulation va changer et l'ouverture du clapet ne se fera plus au même moment, entrainant une variation de la pression basse du gaz détendu à travers ce clapet et donc un mauvais fonctionnement et rendement, et des perturbations dans l'appareil utilisateur, qui se situe en aval du détendeur dont il reçoit directement le gaz à la pression basse.

Chaque détendeur a ainsi une «courbe de détente dynamique» qui est représentatif de cette propriété qui peut donc être très gênantes. Pour pallier à cet inconvénient, il a été développé plusieurs catégories de détendeurs connus qui règlent la pression de sortie indépendamment de la pression d'entrée quand celle-ci peut varier, tels que:
- ceux à deux étages,
- ceux, de type classique, disposant d'un clapet dit « compensé » qui annule l'influence de la pression haute, et
- ceux, de type inversé, ayant une surface de contact efficace très faible du coté du gaz à la pression haute, de telle façon que celle-ci, s'appuyant sur une petite surface, génère, sur la pièce mobile de régulation, une force qui soit négligeable par rapport à celle exercée par l'élément ressort qui appuie dans le même sens alors que la surface de contact du côté du gaz à la pression basse est importante, comme décrit dans les demandes de brevet EP362166, FR2879721, FR2050407 ainsi que dans la demande internationale WO2012/173527 considérée du reste comme l'art antérieur le plus proche.

La présente invention se situe dans cette dernière catégorie de détendeurs de gaz et se rapporte à un détendeur compact destiné à être monté d'une manière simple et rapide, nécessitant un minimum de raccords, sur tout type de conduit d'amenée de gaz reliant le plus directement une source de gaz à pression haute à un appareil utilisateur fonctionnant à une pression basse, ou directement entre la source et l'appareil utilisateur, et dont la pression basse d'alimentation de celui-ci puisse être réglable facilement.

Cet objectif est atteint par un détendeur inversé de gaz comportant au moins un conduit d'arrivée d'un gaz à pression dite haute, au moins un conduit de sortie de ce gaz à pression dite basse depuis une chambre de détente aval, une pièce mobile de régulation sur laquelle appuie d'un côté la pression basse et de l'autre côté un élément ressort , et qui est apte à fermer l'arrivée du gaz à pression haute, et des connecteurs amont et aval aptes à relier et intégrer le détendeur à tout circuit de gaz fournissant, en amont de celui-ci, le gaz à pression haute et alimentant, en aval du détendeur, le dit gaz à la pression basse, et tel que :
- les dits conduits d'arrivée et de sortie sont situés et débouchent chacun à l'intérieur respectivement des connecteurs amont et aval, et ces deux connecteurs, disposées coaxialement, sont aptes à relier en ligne le détendeur au dit circuit,
- le dit détendeur inversé de gaz comportant un corps creux constitué de deux parties creuses coaxiales, dites amont du côté de la pression haute et aval du côté de la pression basse, emboitées et vissées l'une dans l'autre,
- la pièce mobile de régulation comporte une tête délimitant, dans la partie creuse la plus intérieure du corps creux la chambre de détente de volume variable et étanche ; et une tige de section inférieure à celle de la tête dont elle est solidaire, et qui coulisse d'une manière étanche dans le fond de la partie amont, l'extrémité distale de cette tige venant s'appuyer, en position de fermeture de l'arrivée de gaz à pression haute, contre un joint butée de l'élément ressort entourant la tige s'appuyant d'un côté contre la tête du piston et de l'autre côté contre le fond de la partie creuse amont à travers laquelle coulisse la tige, et tel que suivant l'invention :
- le conduit d'arrivée du gaz à pression haute est située sur le côté du connecteur amont et débouche latéralement, en position de fermeture de l'arrivée de gaz à pression haute, contre l'extrémité distale de la tige de la pièce mobile de régulation qui assure la dite fermeture, lequel gaz à pression haute n'agit pas alors directement sur cet élément mobile de régulation, comme dans les exemples de réalisation décrits ci-après, car agissant sur la perpendiculaire de l'axe d'ouverture de l'organe permettant au gaz d'alimenter la chambre à la pression basse : ainsi dans cette position, la surface de contact efficace du côté du gaz à la pression haute, perpendiculaire à la pièce mobile de régulation, et qui est la seule ayant une influence, devient même extrêmement faible si ce n'est nulle.

De plus le détenteur comporte un dispositif de réglage de la poussée de l'élément ressort en position de fermeture de l'arrivée de gaz à pression haute, lequel dispositif de réglage est coaxial au mouvement de la pièce mobile de régulation et modifiable par rotation d'un élément axial d'au moins un des connecteurs.

Le résultat est un nouveau détendeur inversé de gaz qui répond aux objectifs ci-dessus car, entre autres, il est connectable en ligne dans tout circuit ou directement d'un côté sur la source de gaz à pression haute et de l'autre à l'appareil utilisateur de la pression basse, l'ensemble formant alors un dispositif compact sans raccord intermédiaire, qui est transportable et nomade, et dont le réglage de la pression basse est simple.

On pourrait citer d'autres avantages de la présente invention mais ceux cités ci-dessus en montrent déjà suffisamment pour en prouver la nouveauté et l'intérêt.

La description ci-après et les dessins joints représentent deux exemples de réalisation de l'invention, mais n'ont aucun caractère limitatif : d'autres réalisations sont possibles dans le cadre de la portée et de l'étendue de cette invention.

En effet bien que l'invention est décrite en liaison avec des exemples particuliers de réalisation, il est évident qu'elle n'y est nullement limitée mais au contraire susceptible de modifications et de variantes qui apparaîtront à l'homme de l'art et qu'elle comprend tous les éléments techniques des moyens décrits ainsi que leurs combinaisons si celles-ci entrent dans le cadre de l'invention.
La figure 1 est une vue en coupe axiale d'un détendeur suivant l'invention avec un réglage de la pression basse du côté du connecteur d'alimentation en gaz à pression haute
La figure 2 est une vue en coupe axiale d'un détendeur suivant l'invention avec un réglage de la pression basse du côté du connecteur de sortie du gaz à pression basse.

Le détendeur suivant l'invention comprend un corps creux 8 sensiblement tubulaire d'axe XX' et réalisé en matériau compatible et étanche aux gaz ; il comporte d'une manière connue au moins :
- un conduit d'arrivée 1 d'un gaz à pression dite haute,
- un conduit de sortie 2 de ce gaz à pression dite basse depuis une chambre de détente aval 5,
- une pièce mobile de régulation 3 sur laquelle appuie d'un côté la pression basse et de l'autre côté un élément ressort 4, et qui est apte à fermer l'arrivée du gaz 1 à pression haute, et
- des connecteurs amont 6 et aval 7 aptes à relier et intégrer le détendeur à tout circuit de gaz fournissant, en amont, à celui-ci le gaz à pression haute et alimentant, en aval du détendeur, le dit gaz à la pression basse.

Selon l'invention les dits conduits d'arrivée 1 et de sortie 2 de gaz sont situés et débouchent chacun à l'intérieur respectivement des connecteurs amont 6 et aval 7 ; et ces deux connecteurs 6,7 disposées coaxialement suivant l'axe XX', sont aptes à relier en ligne, suivant cet axe, le détendeur au dit circuit tel que directement d'un côté sur la source de gaz à pression haute, qui peut être un petit réservoir de stockage de gaz, tel qu'une recharge d'hydrogène amovible à base d'hydrures métalliques, et de l'autre à l'appareil utilisateur de la pression basse, qui peut être un petit générateur électrique utilisant l'energie du gaz, tel qu'une petite pile à combustible, l'ensemble formant alors un dispositif compact sans raccord intermédiaire, qui est transportable et nomade.

Le corps creux 8 de ce détendeur est de préférence constitué de deux parties creuses coaxiales, de forme cylindrique, de préférence circulaire de révolution, l'une 10 qu'on appellera amont du côté de la pression haute et l'autre 11 aval du côté de la pression basse, emboitées et vissées l'une dans l'autre et formant un volume interne dans lequel se déplace la pièce mobile de régulation 3. Ce corps creux 8 peut intégrer également divers autres composants tels que des soupapes de décharge en cas de surpression, des systèmes de blocage de sécurité, des dispositifs de connections autres que les connecteurs ...

Des joints toriques 14 sont disposés de part et d'autre du corps creux 8, du côté des connecteurs amont 6 et aval 7 et respectivement en aval de le conduit d'arrivée 1 et en amont de le conduit de sortie 2, pour assurer l'étanchéité du détendeur avec le circuit sur lequel il est assemblé par des pièces raccordement qui viennent se visser ou clipper sur les connecteurs 6,7.

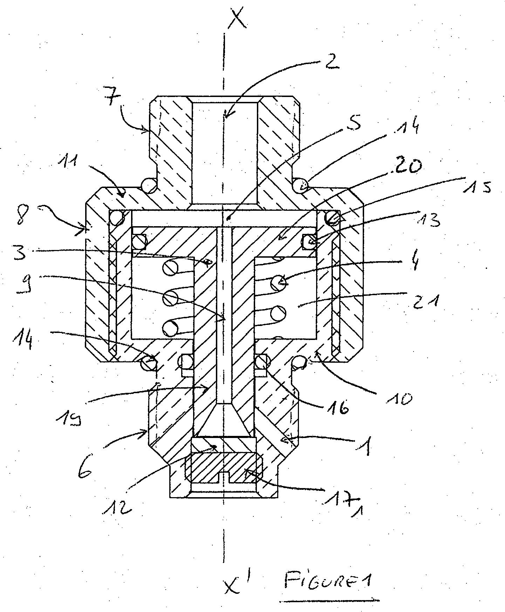

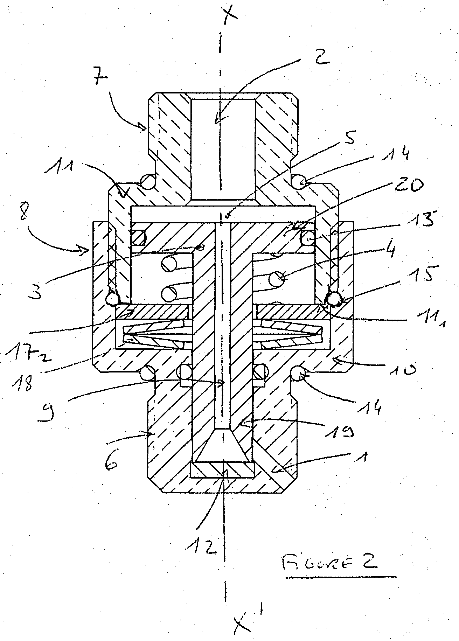

La pièce mobile de régulation 3, qui peut être un piston comme représenté sur les figures mais qui pourrait être une membrane, comporte :
- une tige 19 axiale de section inférieure à celle de la tête dont elle est solidaire, et qui coulisse d'une manière étanche dans le fond de la partie amont 10, et
- une tête 20 délimitant, dans la partie creuse la plus intérieure du corps creux 8, qui peut-être soit celle amont 10 suivant la figure 2 soit celle aval 11 suivant la figure 1, la chambre de détente 5 de volume variable et étanche, dans laquelle débouche le conduit de sortie 2 qui traverse ensuite l'intérieur du connecteur aval 7 tel qu'axialement comme représenté sur les figures; cette étanchéité de la chambre de détente 5 nécessite, dans le mode de réalisation de la figure 1, un joint 15 tel que celui torique représenté entre le bord périphérique de la partie creuse amont 10 et le fond de la partie creuse aval 11.

L'étanchéité du piston 3,20 est assurée, entre la chambre de détente 5 et le compartiment 21 où est situé l'élément ressort 4, par un joint torique 13 situé périphériquement dans l'épaisseur de la tête 20.

Ce compartiment 21 communique de préférence avec l'extérieur du détenteur, soit par la fuite naturelle du vissage entre les parties amont 10 et aval 11, comme sur la figure 2, soit par un conduit non représenté, comme cela pourrait être le cas sur la figure 1, si l'on ne veut pas rajouter une force de compression perturbatrice contre la tête 20 du piston, mais au contraire on peut rendre étanche ce compartiment 21 et le mettre en pression à une valeur donnée pour obtenir un effet formant élément ressort apte à remplacer le ressort 4 représenté dans les exemples des figures 1 et 2.

L'extrémité distale de la tige 19 vient s'appuyer, en position de fermeture de l'arrivée 1 de gaz à pression haute, contre un joint formant butée 12 et l'élément ressort 4 entourant la tige 19 s'appuyant d'un côté contre la tête 20 du piston 3 et de l'autre côté contre le fond de la partie creuse amont 10 à travers laquelle coulisse la tige 19.
le conduit 1 d'arrivée du gaz à pression haute est situé et débouche, à une de ses extrémités, à l'intérieur, sur le côté et en amont de son système de fixation tel que par vissage, du connecteur amont 6, dont il traverse la paroi périphérique, et débouche latéralement à son autre extrémité, en position de fermeture de l'arrivée 1 de gaz à pression haute comme représenté sur les figures, contre l'extrémité distale de la tige 19 de la pièce mobile de régulation 3 qui assure la dite fermeture.

Dans d'autres modes de réalisation non représentés ici, ce conduit 1 pourrait être disposé dans l'axe XX' du détenteur, tel qu'à travers ou à côté du bouchon 17₁ représenté sur la figure 1.

L'arrivée 1 du gaz à la pression haute s'ouvre quand la pression basse dans la chambre de détente 5 diminue et que la poussée du ressort 4 déplace la pièce mobile de régulation 3 : l'extrémité distale de la tige 19 se soulève alors du joint butée 12, ouvrant l'arrivée 1 du gaz et la communication entre celle-ci et la chambre de détente 5 à la pression basse est assuré ici par un canal interne 9 de la tige 19 de la pièce mobile de régulation 3 et débouchant à ses deux extrémités.

Dans d'autres modes de réalisation, cette communication peut être assurée par un conduit externe à la tige 20.

Ce détendeur suivant l'invention comporte de préférence un dispositif de réglage 17 de la poussée de l'élément ressort 4 qui est coaxial au mouvement de la pièce mobile de régulation 3 suivant l'axe XX' du détenteur, et dont la position, modifiable suivant cet axe par rotation d'un élément axial coopérant avec un des connecteurs 6,7 , détermine la force maximum de compression de l'élément ressort 4 en position de fermeture de l'arrivée 1 de gaz à pression haute et donc la valeur de la pression basse dans la chambre de détente 5, qui exerce la force antagoniste à celle de ce ressort.

Suivant le mode de réalisation de la figure 1, ce dispositif de réglage 17 est un bouchon 17₁ vissé dans l'axe du connecteur amont 6 à l'intérieur de l'alésage percé dans le fond de la partie amont 10 du détendeur et dans lequel coulisse la tige 19 du piston 3 : ce bouchon maintient le joint butée 12 à la hauteur voulue, obtenue par vissage ou dévissage du bouchon 17₁, pour que la compression maximum du ressort 4, en position de fermeture de l'arrivée 1 de gaz à pression haute, corresponde à la force permettant d'obtenir la pression basse voulue dans la chambre 5.

Suivant le mode de réalisation de la figure 2, le dispositif de réglage 17 est une pièce 17₂ recevant en appui le ressort 4 : cette pièce 17₂ est un disque rigide percé en son centre pour laisser passer librement la tige 19 et forme un double fond dans la partie creuse amont 10 du détendeur ; un deuxième élément ressort 18, situé dans ce double fond, et de raideur et force beaucoup plus importantes que celles du ressort de régulation 4, maintient cette pièce d'appui 17₂ contre le bord périphérique 11₁ de la partie creuse aval 11 du corps creux 8 ; dans ce mode de réalisation, ladite partie creuse aval 11 est nécessairement emboitée et vissée à l'intérieur de la partie creuse amont 10, mais cette emboitement partie aval 11 dans partie amont 10 pourrait être utilisé également dans le mode de réalisation de la figure 1 où l'emboitement est ici inverse.

En vissant ou dévissant alors cette partie creuse aval 11, et donc aussi le connecteur aval 7 qui en est solidaire pour constituer avec elle une seule pièce, on fait varier la compression maximum du ressort 4, en position de fermeture de l'arrivée 1 de gaz à pression haute, jusqu'à ce qu'elle corresponde à la force permettant d'obtenir la pression basse voulue dans la chambre 5.

## Revendications

1. Détendeur inversé de gaz comportant au moins un conduit d'arrivée (1) d'un gaz à pression dite haute, au moins un conduit de sortie (2) de ce gaz à pression dite basse depuis une chambre de détente aval (5), une pièce mobile de régulation (3) sur laquelle appuie d'un côté la pression basse et de l'autre côté un élément ressort (4), et qui est apte à fermer l'arrivée du gaz (1) à pression haute, et des connecteurs amont (6) et aval (7) aptes à relier et intégrer le détendeur à tout circuit de gaz fournissant, en amont de celui-ci, le gaz à pression haute et alimentant , en aval du détendeur, le dit gaz à la pression basse, et tel que :
- les dits conduits d'arrivée (1) et de sortie (2) sont situés et débouchent chacun respectivement à l'intérieur des connecteurs amont (6) et aval (7), et ces deux connecteurs (6,7), disposées coaxialement, sont aptes à relier en ligne le détendeur au dit circuit,
- le dit détendeur inversé de gaz comporte un corps creux (8) constitué de deux parties creuses coaxiales, dites amont (10) du côté de la pression haute et aval (11) du côté de la pression basse, emboitées et vissées l'une dans l'autre,
- la pièce mobile de régulation (3) comporte une tête (20) délimitant, dans la partie creuse la plus intérieure du corps creux (8) la chambre de détente (5) de volume variable et étanche, et une tige (19) de section inférieure à celle de la tête dont elle est solidaire, et qui coulisse d'une manière étanche dans le fond de la partie amont (10), l'extrémité distale de cette tige (19) venant s'appuyer, en position de fermeture de l'arrivée (1) de gaz à pression haute, contre un joint butée (12) et l'élément ressort (4) entourant la tige (19) s'appuyant d'un côté contre la tête (20) du piston (3) et de l'autre côté contre le fond de la partie creuse amont (10) à travers laquelle coulisse la tige (19),
**caractérisé en ce que** :
- le conduit (1) d'arrivée du gaz à pression haute est située sur le côté du connecteur amont (6) et débouche latéralement, en position de fermeture de l'arrivée (1) de gaz à pression haute, contre l'extrémité distale de la tige (19) de la pièce mobile de régulation (3) qui assure la dite fermeture, lequel gaz à pression haute n'agit pas alors directement sur cet élément mobile de régulation (3), mais sur la perpendiculaire de l'axe d'ouverture de celui-ci permettant au gaz d'alimenter la chambre de détente à la pression basse (5),
- la surface de contact efficace du côté du gaz à la pression haute, perpendiculaire ainsi à la pièce mobile de régulation (3), et qui est la seule ayant une influence, devient extrêmement faible si ce n'est nulle.

2. Détendeur inversé de gaz suivant la revendication 1 **caractérisé en ce qu'**il comporte un dispositif de réglage (17) de la poussée de l'élément ressort (4), lequel dispositif de réglage (17) est coaxial au mouvement de la pièce mobile de régulation (3) et sa position, modifiable par rotation d'un élément axial coopérant avec un des connecteurs (6,7), détermine la force maximum de compression de l'élément ressort (4) en position de fermeture de l'arrivée (1) de gaz à pression haute et donc la valeur de la pression basse.

3. Détendeur inversé de gaz suivant la revendication 2 **caractérisé en ce que** le dispositif de réglage (17) est un bouchon (17₁) vissé dans l'axe du connecteur amont (6) à l'intérieur de l'alésage percé dans le fond de la partie amont (10) et dans lequel coulisse la tige (19) du piston (3), lequel bouchon maintient le joint butée (12) à la hauteur voulue.

4. Détendeur inversé de gaz suivant la revendication 2 **caractérisé en ce que** le dispositif de réglage (17) est une pièce d'appui (17₂), formant double fond de la partie creuse amont (10), du ressort (4) et un deuxième ressort (18) situé dans ce double fond maintient cette pièce d'appui (17₂) contre le bord de la partie creuse aval (11) du corps creux (8), qui est emboitée et vissée à l'intérieur de la partie creuse amont (10) et dont la profondeur de vissage par rotation simultanée du connecteur aval (7) maintient cette pièce d'appui à la hauteur voulue.

5. Détendeur inversé de gaz suivant l'une quelconque des revendications 1 à 4 **caractérisé en ce que** la tige (19) de la pièce mobile de régulation (3) comporte un canal interne (9) débouchant à ses deux extrémités et qui assure la communication entre l'arrivée (1) du gaz à la pression haute et la chambre de détente (5) à la pression basse.

6. Détendeur inversé de gaz suivant l'une quelconque des revendications 1 à 4 **caractérisé en ce que** la communication entre l'arrivée (1) du gaz à la pression haute et la chambre de détente (5) à la pression basse est assurée par un conduit externe à la tige (19).

## Patentansprüche

1. Invertierter Gasdruckregler, aufweisend mindestens eine Zufuhrleitung (1) eines Gases mit hohem Druck, mindestens eine Auslassleitung (2) dieses Gases mit niedrigem Druck aus einer nachgelagerten Entspannungskammer (5), ein bewegliches Regulierteil (3), auf welches von einer Seite der Niederdruck und von der anderen Seite ein Federelement (4) drückt, und das imstande ist, die Zufuhr des Gases (1) mit hohem Druck zu verschließen, und einen vorgelagerten (6) und einen nachgelagerten Verbinder (7), die imstande sind, den Druckregler mit jedem Gaskreis zu verbinden und zu integrieren, der, diesem vorgelagert, das Gas mit hohem Druck liefert und dem Druckregler nachgelagert das Gas mit niedrigem Druck bereitstellt und derart, dass:
- sich die Zufuhrleitung (1) und die Auslassleitung (2) jeweils im Inneren des vorgelagerten (6) und des nachgelagerten Verbinders (7) befinden und ausmünden, und diese zwei koaxial angeordneten Verbinder (6, 7) imstande sind, den Druckregler mit dem Kreis in Reihe zu verbinden,
- der invertierte Gasdruckregler einen Hohlkörper (8) aufweist, der aus zwei koaxialen hohlen Teilen, bezeichnet als vorgelagert (10) auf der Hochdruckseite und nachgelagert (11) auf der Niederdruckseite, besteht, die ineinandergesteckt und verschraubt sind,
- das bewegliche Regulierteil (3) einen Kopf (20) aufweist, der im innersten hohlen Teil des Hohlkörpers (8) der Entspannungskammer (5) variablen und dichten Volumens begrenzt, und eine Stange (19) mit einem Querschnitt, der kleiner als der des Kopfes ist, mit dem sie fest verbunden ist, und die dicht im Boden des vorgelagerten Teils (10) gleitet, wobei sich das distale Ende dieser Stange (19) in Verschlussposition der Zufuhr (1) von Gas mit hohem Druck auf einer Anschlagdichtung (12) abstützt und sich das Federelement (4), welches die Stange (19) umgibt, auf einer Seite auf dem Kopf (20) des Kolbens (3) und auf der anderen Seite auf dem Boden des vorgelagerten hohlen Teils (10) abstützt, durch den die Stange (19) gleitet,
**dadurch gekennzeichnet, dass**:
- sich die Zufuhrleitung (1) des Gases mit hohem Druck auf der Seite des vorgelagerten Verbinders (6) befindet und in Verschlussposition der Zufuhr (1) von Gas mit hohem Druck am distalen Ende der Stange (19) des beweglichen Regulierteils (3), das den Verschluss gewährleistet, seitlich ausmündet, wobei das Gas mit hohem Druck dabei nicht direkt auf dieses bewegliche Regulierelement (3) wirkt, sondern auf die Senkrechte der Öffnungsachse desselben, was dem Gas erlaubt, die Entspannungskammer mit niedrigem Druck (5) zu versorgen,
- die auf der Seite des Gases mit hohem Druck wirksame Kontaktfläche, die somit senkrecht zu dem beweglichen Regulierteil (3) ist, und welche die einzige ist, die einen Einfluss hat, extrem schwach, wenn nicht sogar Null, wird.

2. Invertierter Gasdruckregler nach Anspruch 1, **dadurch gekennzeichnet, dass** er eine Reguliervorrichtung (17) des Schubs des Federelements (4) aufweist, wobei die Reguliervorrichtung (17) zur Bewegung des beweglichen Regulierteils (3) koaxial ist und ihre Position, die durch Rotation eines axialen Elements, das mit einem der Verbinder (6, 7) zusammenwirkt, veränderbar ist, die maximale Kompressionskraft des Federelements (4) in Verschlussposition der Zufuhr (1) von Gas mit hohem Druck und demzufolge den Wert des Niederdrucks bestimmt.

3. Invertierter Gasdruckregler nach Anspruch 2, **dadurch gekennzeichnet, dass** die Reguliervorrichtung (17) ein Stopfen (17₁) ist, der in die Achse des vorgelagerten Verbinders (6) in das Innere der Bohrung geschraubt ist, die in den Boden des vorgelagerten Teils (10) gebohrt ist und in welchem die Stange (19) des Kolbens (3) gleitet, wobei der Stopfen die Anschlagdichtung (12) in der gewollten Höhe hält.

4. Invertierter Gasdruckregler nach Anspruch 2, **dadurch gekennzeichnet, dass** die Reguliervorrichtung (17) ein Stützteil (17₂), das einen doppelten Boden des vorgelagerten hohlen Teils (10) bildet, der Feder (4) ist und eine zweite Feder (18), die sich in diesem doppelten Boden befindet, dieses Stützteil (17₂) am Rand des nachgelagerten hohlen Teils (11) des Hohlkörpers (8) hält, der in das Innere des nachgelagerten hohlen Teils (10) gesteckt und verschraubt ist und dessen Schraubtiefe durch gleichzeitige Rotation des nachgelagerten Verbinders (7) diesen Stützteil in der gewollten Höhe hält.

5. Invertierter Gasdruckregler nach einem der Ansprüche 1 bis 4, **dadurch gekennzeichnet, dass** die Stange (19) des beweglichen Regulierteils (3) einen inneren Kanal (9) aufweist, der an seinen zwei Enden ausmündet und der die Kommunikation zwischen der Zufuhr (1) des Gases mit hohem Druck und der Entspannungskammer (5) mit niedrigem Druck sichert.

6. Invertierter Gasdruckregler nach einem der Ansprüche 1 bis 4, **dadurch gekennzeichnet, dass** die Kommunikation zwischen der Zufuhr (1) des Gases mit hohem Druck und der Entspannungskammer (5) mit niedrigem Druck von einer Leitung gewährleistet wird, die zu der Stange (19) extern ist.

## Claims

1. Inverted gas pressure regulator including at least one so-called high-pressure gas inlet duct (1), at least one so-called low-pressure gas outlet duct (2) leading from a downstream expansion chamber (5), a mobile regulation part (3) on one side of which the low pressure is exerted and on the other side of which a spring element (4) bears, and which is adapted to shut off the high-pressure gas inlet (1), and an upstream connector (6) and a downstream connector (7) adapted to connect the pressure regulator to and integrate it into any gas circuit supplying, on its upstream side, the high-pressure gas and, on the downstream side of the pressure regulator, said low-pressure gas, and such as:
- the said inlet duct (1) and the said outlet duct (2) are situated in and discharge into the upstream connector (6) and the downstream connector (7), respectively, and these two connectors (6,7), disposed coaxially, are adapted to connect the pressure regulator in line to said circuit,
- the said inverted gas pressure regulator includes a hollow body (8) constituted of two coaxial hollow parts, referred to as the upstream part (10) on the high-pressure side and the downstream part (11) on the low-pressure side, nested and screwed in one another,
- and the mobile regulation part (3) includes a head (20) delimiting, in the hollow part farthest inside the hollow body (8), the variable-volume gas-tight expansion chamber (5), and a rod (19) of smaller section that the head to which it is fastened and which slides in a gas-tight manner in the bottom of the upstream part (10), the distal end of this rod (19) coming to bear against an abutment seal (12) in the position with the high-pressure gas inlet (1) shut off, and the spring element (4) surrounding the rod (19) bearing on one side against the head (20) of the piston (3) and on the other side against the bottom of the upstream hollow part (10) through which the rod (19) slides,
**characterized in that**:
- the high-pressure gas inlet duct (1) is situated on the same side as the upstream connector (6) and in the position with the high-pressure gas inlet (1) shut off discharges laterally against the distal end of the rod (19) of the mobile regulation part (3) that performs said shutting off, and in this position the high-pressure gas does not act so directly on the mobile regulation element, but perpendicularly to the axis along which the member allowing the gas to feed the chamber at the low pressure,
- the effective contact area on the high-pressure gas side, perpendicular to the mobile regulation part (3), and which is the only one acting, therefore even becomes extremely low, if not zero.

2. Inverted gas pressure regulator according to either the Claim 1 **characterized in that** it includes a device (17) for adjusting the thrust of the spring element (4), which adjustment device (17) is coaxial with the movement of the mobile regulation part (3) and its position, which can be modified by rotation of an axial element cooperating with one of the connectors (6, 7), determines the maximum force of compression of the spring element (4) in the position with the high-pressure gas inlet (1) shut off and therefore determines the value of the low pressure.

3. Inverted gas pressure regulator according to Claim 2 **characterized in that** the adjustment device (17) is a plug (17₁) screwed along the axis of the upstream connector (6) into the bore pierced in the bottom of the upstream part (10) and in which the rod (19) of the piston (3) slides, which plug holds the abutment seal (12) at the required height.

4. Inverted gas pressure regulator according to Claim 2, **characterized in that** the adjustment device (17) of the spring element (4) is a bearing part (17₂) forming a double bottom of the upstream hollow part (10) and a second spring (18) situated in this double bottom holds this bearing part (17₂) against the edge of the downstream hollow part (11) of the hollow body (8), which is nested in and screwed into the upstream hollow part (10), and the depth of screwing by simultaneous rotation of the downstream connector (7) holds this bearing part at the required height.

5. Inverted gas pressure regulator according to any one of Claims 1 to 4 **characterized in that** the rod (19) of the mobile regulation part (3) includes an internal channel (9) open at both its ends that provides the communication between the high-pressure gas inlet (1) and the low-pressure expansion chamber (5) .

6. Inverted gas pressure regulator according to any one of Claims 1 to 4 **characterized in that** the communication between the high-pressure gas inlet (1) and the low-pressure expansion chamber (5) is provided by a duct external to the rod (19).
